Europäisches Patentamt

(19) **European Patent Office**

**Office européen des brevets**

(11) Numéro de publication: **0 040 154**
**B1**

(12) **FASCICULE DE BREVET EUROPEEN**

(45) Date de publication du fascicule du brevet:
01.02.84

(51) Int. Cl.³: **B 65 B 21/18**

(21) Numéro de dépôt: **81400746.4**

(22) Date de dépôt: **11.05.81**

(54) **Machine pour remplir ou vider des conteneurs destinés au transport d'objets rangés.**

(30) Priorité: **12.05.80 FR 8010600**

(43) Date de publication de la demande:
**18.11.81 Bulletin 81/46**

(45) Mention de la délivrance du brevet:
**01.02.84 Bulletin 84/5**

(84) Etats contractants désignés:
**AT BE CH DE GB IT LI LU NL SE**

(56) Documents cités:
**FR - A - 1 522 630**
**FR - A - 1 580 926**
**FR - A - 1 584 490**

(73) Titulaire: **Thierion, Michel, Muizon**
**F-51140 Jonchery-Sur-Vesle (Marne) (FR)**

(72) Inventeur: **Thierion, Michel, Muizon**
**F-51140 Jonchery-Sur-Vesle (Marne) (FR)**

(74) Mandataire: **Chevallier, Robert, Cabinet**
**BOETTCHER 23, rue La Boétie, F-75008 Paris (FR)**

BUNDESDRUCKEREI BERLIN

# Machine pour remplir ou vider conteneurs destinés au transport d'objets rangés

L'invention se rapporte à une machine dont le rôle est de remplir, ou de vider, automatiquement des conteneurs destinés au transport d'objets individuels rangés. Pour fixer les idées, on prendra dans ce qui suit l'exemple de bouteilles pleines qui sont rangées dans les conteneurs en couches successives en hauteur; chaque couche est composée de deux rangs de bouteilles qui sont dirigés dans des sens opposés et dans chaque rang les bouteilles sont couchées tête-bêche.

Dans un tel cas, la machine est équipée de moyens de préhension adaptés à la prise de bouteilles couchées. A condition de modifier convenablement ces moyens de préhension, on peut utiliser la machine de l'invention pour la manutention d'objets autres que des bouteilles.

Il existe déjà des machines à fonctionnement automatique capables de joeur le rôle défini ci-dessus. On en trouvera un exemple dans le brevet FR-A-22 19 061. La machine de ce brevet fonctionne de façon satisfaisante, à un débit important de l'ordre de 10 000 à 12 000 bouteilles à l'heure. Mais, pour travailler sans difficulté à cette cadence élevée, elle est composée d'organes relativement nombreux qui se déplacent le long de glissières rigides assurant la précision des mouvements. Pour cette raison son prix est élevé et son maintien en ordre de marche est plutôt coûteux.

Le but principal de la présente invention est de simplifier la machine décrite dans le brevet précité afin d'abaisser notablement son prix, tout en conservant un fonctionnement automatique satisfaisant, en diminuant nettement le coût de l'entretien et en lui conservant une cadence de travail importante, de l'ordre de 6000 bouteilles/heure.

La solution n'est pas aussi facile qu'il y paraît parce que les mouvements des organes de la machine doivent rester précis et que la suppression d'organes rigides fermement guidés tend, au contraire, à diminuer rapidement la précision des mouvements.

On trouve dans le brevet FR-A-15 84 490 la description d'une machine, du type énoncé dans le préambule de la revendication 1, pour remplir ou vider des caisses de bouteilles dans laquelle un câble métallique, donc un lien flexible, passe sur des poulies pour faire monter et descendre des bras munis de moyens de préhension. Mais ces câbles agissent sur une colonne rigide verticale qui porte les bras en question et qui est guidée elle-même à l'intérieur de moyens de guidage verticaux à galets suffisamment rigides. En fait, les organes mobiles verticalement de ce brevet sont aussi des organes rigides fermement guidés dans des organes rigides fixes.

La présente invention a donc pour objet une machine pour remplir ou vider des conteneurs d'objets rangés fonctionnant entre un poste A réservé aux objets et un poste B réservé aux conteneurs, comprenant un support vertical disposé à proximité du poste A et du poste B, un bras monté sur le support avec une possibilité de pivotement sur 90° entre une position dans laquelle une partie extrême libre du bras surplombe le poste A et une position dans laquelle elle surplombe le poste B, un plateau équipé de ventouses de préhension des objets supporté par la partie extrême du bras et mobile en sens vertical au moyen d'au moins un lien flexible porté par des poulies, le déplacement se faisant entre une position supérieure autorisant le pivotement du bras et une position inférieure de préhension ou de pose des bouteilles, caractérisée en ce qu'il existe plusieurs liens flexibles constitués par des chaînes de suspension du plateau, ces chaînes s'étendant en dessous du bras où elles sont réunies chacune à un élément du plateau par l'intermédiaire de moyens de détection de force et de moyens de centrage coopérant avec des ouvertures de centrage dans la position la plus élevée du plateau, des moyens de détection de tension étant disposés sur le trajet des chaînes pour contrôler la tension de ces chaînes, les poulies d'enroulement et de déroulement desdites chaînes fonctionnant en synchronisme.

La machine selon l'invention comporte avantegeusement quatre chaînes qui s'étendent jusqu'à la première partie extrême du bras horizontal où se trouvent quatre ouvertures de passage à travers lesquelles les chaînes descendent, respectivement chacune jusqu'en dessous du bras horizontal. Les chaînes sont réunies à leur seconde extrémité libre, en dessous du bras, à un plateau horizontal composé de deux demi-panneaux pouvant être écartés et rapprochés l'un de l'autre et munis sur leur face inférieure de ventouses de préhension.

Les moyens de détection de tension qui sont montés sur le chemin de circulation des chaînes, entre les quatre poulies et la première partie extrême du bras horinzontal, permettent de détecter toute baisse de tension de chaque chaîne en dessous d'une valeur prédéterminée.

Pour bien faire comprendre l'invention on donnera maintenant une description d'un exemple de réalisation. On se reportera aux dessins annexés dans lesquels:

— la figure 1 est une vue générale en élévation d'une machine conforme à l'invention montée à proximité d'un poste A d'alimentation en bouteilles et d'un poste B d'alimentation en conteneurs à remplir, représentée dans une position de travail;

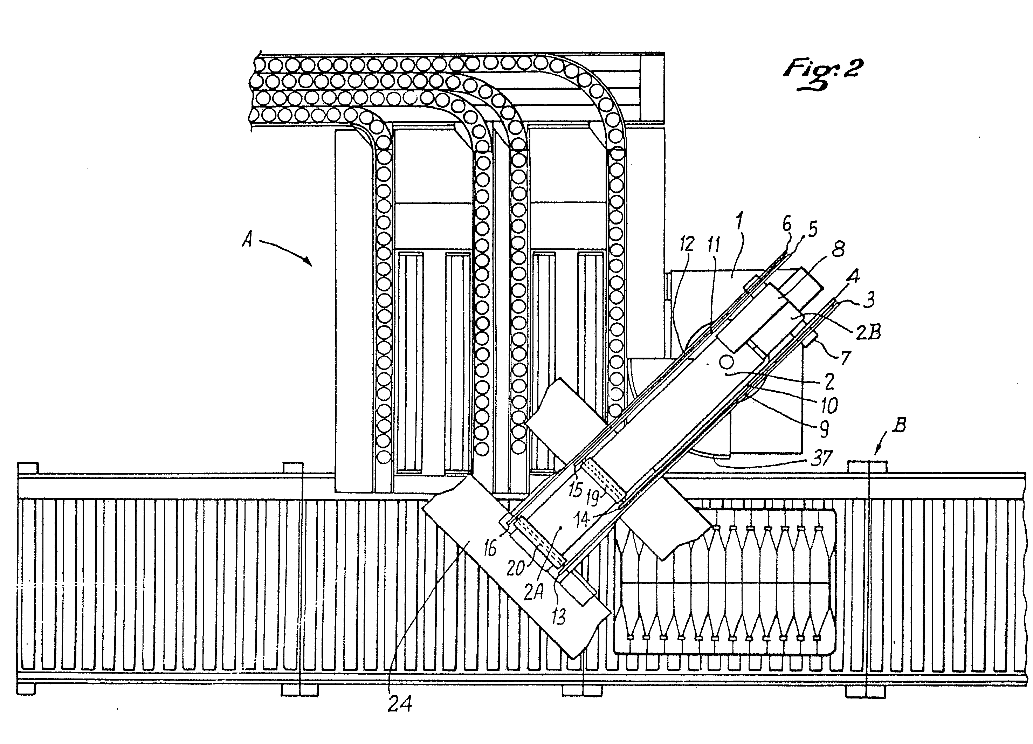

— la figure 2 est une vue générale de dessus de la machine de la fig. 1, représentée dans une autre position de travail;

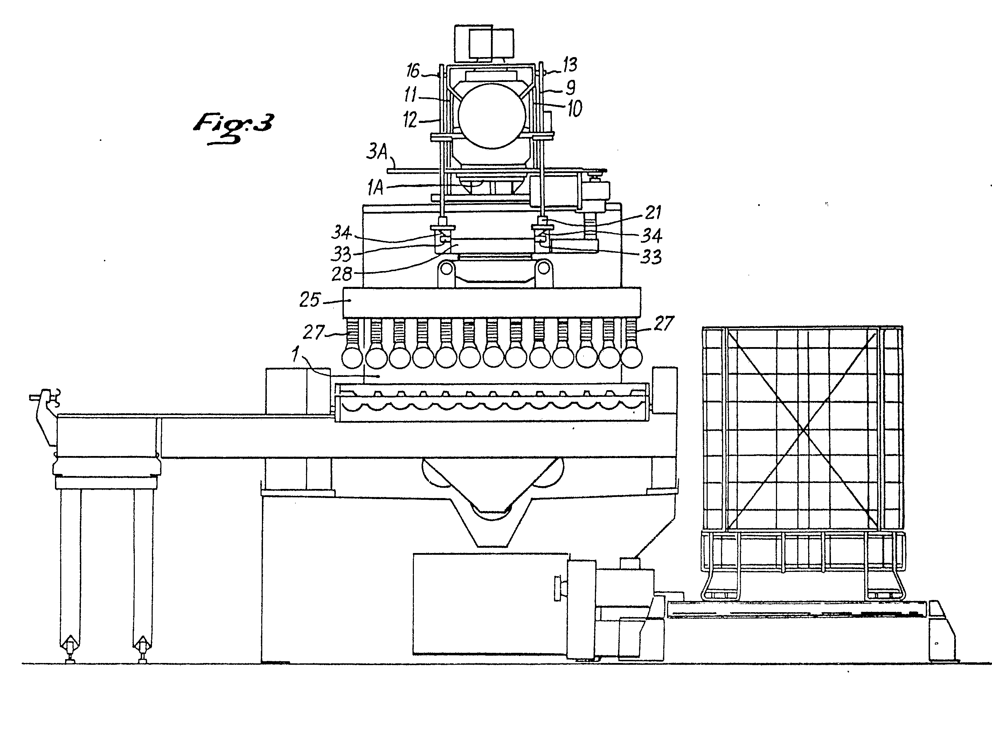

— la figure 3 est une vue générale de côté de la même machine représentée à la position de travail de la fig. 1;

— la figure 4 est une vue de détail agrandie, en coupe partielle, de la machine de l'invention représentée seule sans les postes d'alimentation en conteneurs et en bouteilles.

Comme on l'a dit plus haut, la machine de l'invention résulte d'une simplification considérable de la machine décrite dans le brevet FR-A-2 219 061. Elle a donc en commun avec cette dernière machine certains organes que l'on ne décrira pas en détail. On se limitera, dans ce qui suit, aux organes nouveaux de la présente invention.

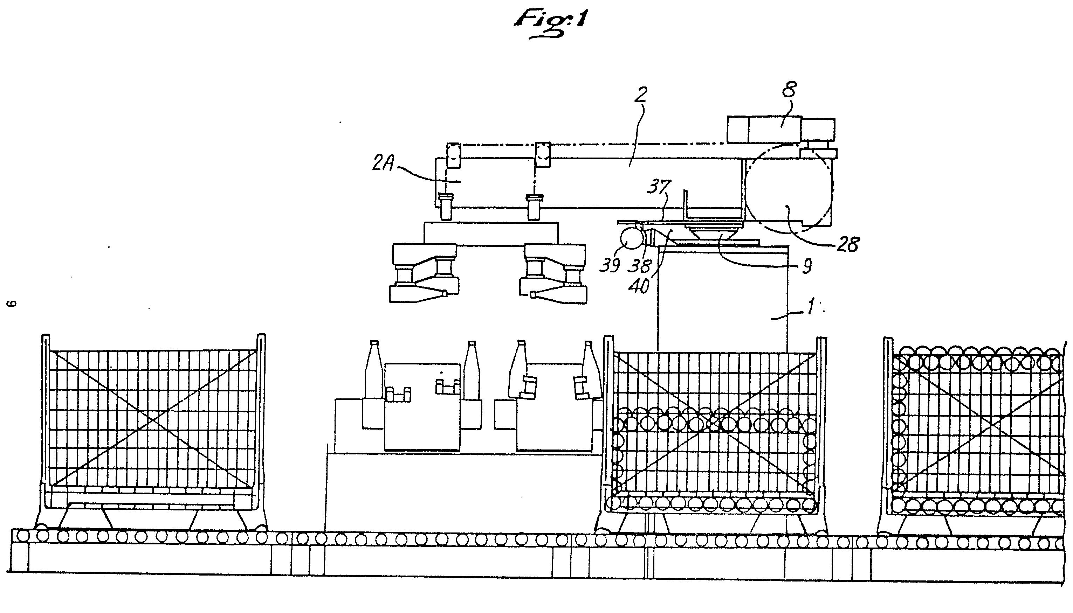

Un poste A d'alimentation en bouteilles couchées et un poste B d'alimentation en conteneurs à remplir sont pracés à angle droit; le poste A se termine par une partie extrême qui est perpendiculaire à un transporteur rectiligne de conteneurs. Cette partie extrême du poste A est équipée d'un dispositif qui couche les boucheilles pour créer deux rangs espacés composés chacun de deux lignes de bouteilles couchées tête-bêche comme on le voit sur la fig. 1. Dans cet exemple, chaque rang comprend 25 bouteilles et lorsque les deux rangs sont rapprochés l'un de l'autre et déposés dans un conteneur, ils garnissent toute la surface de celui-ci; à chaque dépôt de deux rangs de bouteilles couchées dans un conteneur, une couche complète est constituée dans ce dernier.

Le dispositif pour coucher les bouteilles est décrit dans le brevet français précité; il ne fait pas partie de la machine de l'invention qui pourrait fonctionner avec tout autre moyen approprié apte à constituer deux rangs de bouteilles couchées tête-bêche dans chaque rang.

La machine décrite ici en exemple comprend un support vertical 1 sur lequel un bras horizontal 2 est monté pivotant sur un arc de cercle de 90° de façon qu'une première partie extrême libre 2A de ce bras puisse occuper une première position dans laquelle elle surplombe le poste A et une seconde position dans laquelle elle surplombe le poste B. Ce bras 2 est équipé de quatre poulies 3, 4, 5, 6 qui sont entraînées en rotation, en synchronisme. A cet effet, ces quatre poulies 3 à 6 sont calées sur un même arbre 7 qui est lui-même accouplé à un groupe motoréducteur électrique 8. Pour des raisons d'équilibrage des masses, il est préférable de monter l'ensemble des poulies 3 à 6 et du groupe 8 à la deuxième partie extrême 2B du bras 2 opposée à la première partie extrême 2A, de l'autre côté du pivot 9 porté par le support 1. L'arbre 7 est placé transversalement au bras 2; deux poulies 3, 4 sont calées à une extrémité, à l'extérieur de la face latérale du bras 2 et les deux autres poulies 5, 6 sont calées à l'autre extrémité de l'arbre 7 également à l'extérieur de la face latérale opposée du bras 2.

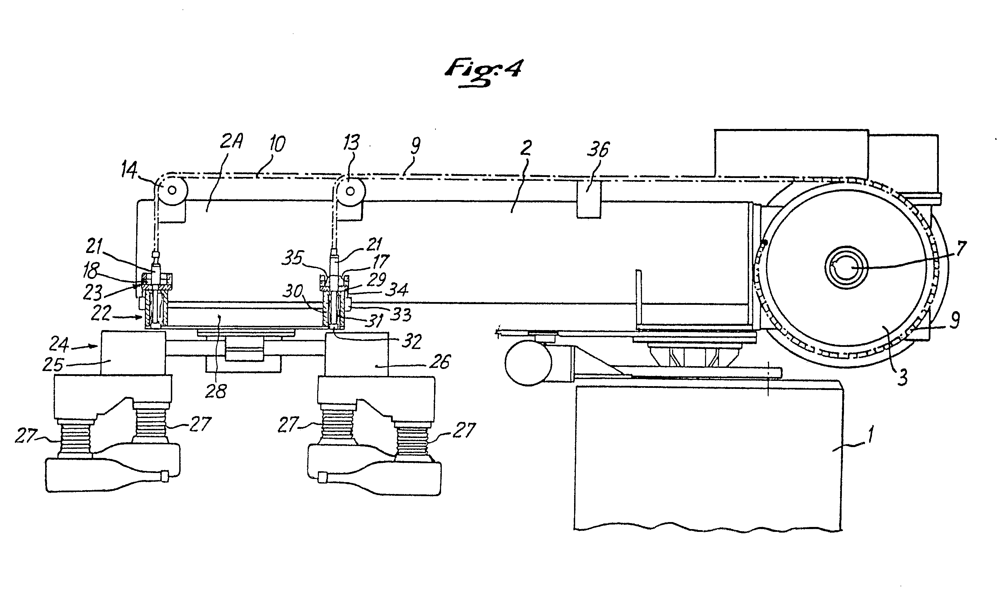

Sur chaque poulier 3 à 6 est fixée une extrémité de chacune de quatre chaînes respectivement 9, 10, 11, 12 qui s'étendent, parallèlement au bras 2, jusqu'à la première partie extrême 2A. Chaque chaîne 9 à 12 passe autour d'une poulie correspondante, respectivement 13, 14, 15, 16 puis descend verticalement pour traverser une ouverture correspondante; deux ouvertures seulement, références 17, 18 sur la figure 4, faisant partie des quatre ouvertures sont visibles sur les dessins.

Les poulies 13 à 16 sont calées deux à deux aux extrémités opposées de deux arbres transversaux 19, 20 supportés par des paliers appropriés montés sur la face supérieure du bras 2. Les arbres transversaux 19, 20 sont espacés dans le sens longitudinal du bras 2 d'une distance qui correspond à l'espacement des deux rangs de bouteilles couchées dans le dispositif de couchage des bouteilles au poste A.

Les quatre ouvertures par lesquelles passent les chaînes 9, 10, 11, 12 sont ménagées dans des plaques latérales fixées sur les côtés du bras 2. A son extrémité libre, chaque chaîne 9 à 12 est munie d'une tige 21. Cette tige 21 passe aussi par l'ouverture correspondante, 17 ou 18, et elle est munie d'un moyen d'amortissement 22 et d'un moyen de détection désigné par la référence 23. Ces moyens 22 et 23 seront décrits plus loin.

Chaque chaîne 9 à 12 est réunie par l'intermédiaire de la tige 21 qui la termine à un plateau, désigné par la référence générale 24, comprenant deux panneaux 25, 26 qui peuvent être écartés et rapprochés symétriquement. Chaque panneau 25, 26 est équipé de deux séries de ventouses à dépression 27 capables de saisir des bauteilles couchées tête-bêche qui ont été mises à cette position au poste A. On ne décrira pas en détail le plateau 24 dont on peut trouver une description dans le brevet français N° 2 219 061, ni les ventouses 27 qui sont décrites dans le brevet français N° 2 370 660.

Les panneaux 25, 26 sont montés déplaçables l'un par rapport à l'autre grâce à des glissières de guidage et à un vérin de manoeuvre (non représentés). Les glissières sont fixées à un élément supérieur 28 du plateau 24; c'est aussi à cet élément 28 que sont réunies les tiges 21 des quatre chaînes 9 à 12, de la façon suivante. En-dessous de chaque ouverture 17, 18, chaque tige 21 porte une bague 29 montée coulissante à frottement dur; cette bague 29 ne peut pas passer par l'ouverture 17 ou 18 à l'entrée de laquelle elle est arrêtée pendant son mouvement vers le haut. Chaque tige 21 s'étend en-dessous de la bague 29 et pénètre dans un logement vertical 30 qui fait partie de l'élément 28. Chaque logement 30 est fermé à sa partie supérieure en-dessous de la bague 29 et ouvert à son extrémité inférieure. A l'intérieur du logement 30 la tige 21 est entourée d'un ressort de compression 31 qui est retenu en sens longitudinal entre la fond du logement 30 et une rondelle elle-même arrêtée par un renflement 32 prévu à l'extrémité inférieure de la tige 21. Les quatre logements 30 font partie intégrante de l'élément supérieur 28 et leur combinaison avec la tige 21, la bague 29 et le ressort 31 constitue un moyen d'amortissement 22. En ajoutant sur le côté des logements 30 un micro-interrupteur 33 ayant un élément de manoeuvre 34 qui est tenu en position de fermeture par la face inférieure de la bague 29, on obtient un moyen de détection 23.

Pendant la descente des chaînes 9 à 12 et, par conséquent, de l'élément supérieur 28 et du plateau 24, les bagues 29 accompagnent les tiges 21 et les micro-interrupteurs 33 restent fermés. Il en est de même pendant le mouvement de montée des chaînes 9 à 12 mais, quand elles arrivent aux ouvertures 17, 18, les bagues 29 sont arrêtées et les tiges 21 continuent à monter en glissant à l'intérieur de ces bagues 29 et en comprimant les ressorts 31. Ainsi est obtenu l'amortissement souhaité de la fin de la course des chaînes 9 à 12 vers le haut. Pendant les mouvements qui viennent d'être décrits, les micro-interrupteurs 33 restent fermés.

On supposera maintenant que les bagues 29 sont encore éloignées des ouvertures 17, 18 pendant leur mouvement de montée avec les chaînes 9 à 12 et avec les tiges 21. S'il arrive pendant ce mouvement que le plateau 24 rencontre un obstacle, par exemple si l'un de ses côtés accroche un côté d'un conteneur, en remontant après y avoir déposé des bouteilles, une (ou plusieurs) tige 21 continue son mouvement par rapport au logement 30 en comprimant le ressort 31 et en entraînant aussi la bague 29 grâce au frottement dur de celle-ci sur la tige 21. Après un faible déplacement de cette dernière, l'élément de manoeuvre 34 est libéré de son contact avec la bague 29 et un circuit est ouvert pour commander l'arrêt du mouvement de montée.

Bien entendu, l'invention n'impose pas le type de moyen d'amortissement 22 ni le type de moyen de détection 23 décrits ci-dessus. Tout moyen quelconque approprié pourrait être employé en remplacement.

En plus des moyens d'amorissement 22 et de détection 23, deux au moins des tiges 21 sont pourvues d'un moyen de centrage 35. Ce dernier est constitué par une pièce profilée se rétrécissant en pointe vers le haut et montée autour de la tige 21 au-dessus de la bague 29. A la fin du mouvement de montée des chaînes 9 à 12, les pièces profilées 35 entrent dans les ouvertures 17, ou 18, et assurent progressivement un centrage satisfaisant des tiges 21 en s'ajustant dans ces ouvertures. Les pièces profilées 35 sont également montées avec un frottement dur sur les tiges 21 afin de ne pas gêner les déplacements relatifs de ces tiges à l'intérieur des bagues 29.

Les ressorts 31 ont une force suffisante pour remettre les tiges 21 à leur position initiale par rapport aux bagues 29 et aux pièces profilées 35 quand les chaînes 9 à 12 n'ont plus que la tension due au poids du plateau 24 et des bouteilles transportées.

Les quatre poulies 3 à 6 ont un diamètre choisi pour que les chaînes 9 à 12 s'y enroulent sur moins d'un tour quand le plateau 24 est remonté à sa position la plus élevée, comme le montre la figure 4. Dans cet état, le plateau 24 occupe une position bien définie grâce aux moyens de centrage 35 et il est fermement tenu dans cette position grâce à la tension avec laquelle les chaînes 9 à 12 sont elles-mêmes tendues. Des moyens de détection 36 sont montés sur le bras 2, sur le trajet des chaînes 9 à 12, entre les poulies 3 à 6 et les poulies 13 à 16. Ces moyens 36 sont d'un type quelconque approprié, par exemple des cellules photoélectriques. Leur rôle est de détecter toute baisse de tension des chaînes 9 à 12 qui dépasse une valeur prédéterminée, et de provoquer alors l'arrêt de la machine.

Au-dessus du pivot 9 par lequel il est supporté, le bras 2 est équipé d'un secteur denté 37 s'étendant sur 90° avec lequel s'engage un pignon denté 38 entraîné en rotation par un moteur 39. Ce dernier est supporté au niveau voulu par une console 40 fixée au support 1.

Le fonctionnement de la machine qui vient d'être décrite est le suivant.

Le plateau 24 est mis et tenu à sa position la plus élevée grâce la tension des chaînes 9 à 12, cette tension étant contrôlée par les détecteurs 36; dans cet état le plateau 24 occupe par rapport au bras 2 une position précise déterminée par la coopération des moyens de centrage 35, des ouvertures 17, 18 et des bagues 29. Le bras 2 est alors mis, par pivotement, à sa position visible sur la figure 1 dans laquelle le plateau 24 surplombe le poste A de couchage des bouteilles. Les polies 3 à 6 laissent alors se dévider les chaînes 9 à 12 pour que le plateau 24 descende jusqu'à ce que les ventouses 27 saisissent les bouteilles couchées. Les détecteurs 36 contrôlent la fin de ce mouvement ainsi que tour accrochage accidentel pendant la descente.

Quand les bouteilles ont été saisies, de la façon expliquée dans les brevets déjà mentionnés plus haut, les poulies 3 à 6 font s'enrouler les chaînes 9 à 12 et remonter le plateau 24 jusqu'à sa position la plus élevée (figure 1) où il est fermement tenu en position comme on l'a déjà dit. Dans cet état, le moteur 39 fait tourner le bras 2 de 90° jusqu'à ce que sa partie extrême surplombe le conteneur se trouvant au poste B. Pendant ce déplacement, les panneaux 25, 26 du plateau 24 sont rapprochés l'un de l'autre si bien que le plateau prend un encombrement plus faible lui permettant de descendre dans le conteneur pour y déposer les bouteilles qui doivent composer une couche complète. Après immobilisation du bras 2, les poulies 3 à 6 laissent à nouveau dévider les chaídes 9 à 12 et descendre le plateau 24 sous le contrôle des détecteurs 36 qui commandent l'arrêt total dès qu'une baisse prédéterminée de la tension des chaînes 9 à 12 erst détectée, soit par suite d'un accrochage du plateau 24 avec les côtés du conteneur, soit par suite de l'arrivée des bouteilles à leur position définitive.

A ce moment, les ventouses 27 libèrent les bouteilles et les poulies 3 à 6 font s'enrouler les chaînes 9 à 12 et remonter le plateau 24. Les moyens de détection 23 contrôlent ce mouvement qu'ils interrompent en cas d'accrochage du plateau 24 avec les côtés du conteneur ou à la fin de la course de montée, comme on l'a expliqué plus haut. Quand le plateau 24 est solidement immobilisé à sa position la plus haute sous le contrôle des détecteurs 36, le bras 2 pivote de 90° pour revenir à sa position de départ; pendant ce mouvement les panneaux 25, 26 sont écartés l'un de l'autre et le cycle recommence.

On notera que la constitution de la machine de l'invention est notablement simplifiée en comparaison de celle de la machine décrite dans le brevet français déjà cité 2 219 061. Elle a, néanmoins, une marche automatique qui offre toute la sécurité désirable. Ce résultat est obtenu, ainsi qu'on l'a démontré, par une combinaison judiciause d'organes mécanisques simples et de détecteurs convenablement disposés.

La machine est pourvue de câbles électriques et de tubes d'air sous pression et de vide qui ne sont pas représentés pour la clarté des figures.

## Revendications

1. Machine pour remplir ou vider des conteneurs d'objets rangés fonctionnant entre un poste A réservé aux objets et un poste B réservé aux conteneurs, comprenant un support vertical (1) disposé à proximité du poste A et du poste B, un bras (2) monté sur le support (1) avec une possibilité de pivotement sur 90° entre une position dans laquelle une partie extrême libre (2A) du bras (2) surplombe le poste A et une position dans laquelle elle surplombe le poste B, un plateau (24) équipé de ventouses (27) de préhension des objets supporté par la partie extrême du bras (2) et mobile en sens vertical au moyen d'au moins un lien flexible (18) porté par des poulies (3–6), le déplacement se faisant entre une position supérieure autorisant le pivotement du bras (2) et une position inférieure de préhension ou de pose des bouteilles, caractérisée en ce qu'il existe plusieurs liens flexibles constitués par des chaînes (9–12) de suspension du plateau (24), ces chaînes s'étendant en dessous du bras (2) où elles sont réunies chacune à un élément (28) du plateau (24) par l'intermédiaire de moyens de détection de force (23) et de moyens de centrage (21, 35) coopérant avec des ouvertures de centrage (17, 18) dans la position la plus élévée du plateau (24), des moyens de détection (36) de tension étant disposér sur le trajet des chaînes (9 à 12) pour contrôler la tension de ces chaînes, les poulies (3 à 6) d'enroulement et de déroulement desdites chaînes (9–12) fonctionnant en synchronisme.

2. Machine selon la revendication 1 caractérisée en ce qu'elle est pourvue de quatre chaînes (9 à 12) qui s'etendent chacune jusqu'à la parti extrême libre (2A) du bras (2) où elles descendent en passant chacune respectivement en dessous de ce bras (2) à travers quatre ouvertures de centrage (17, 18).

3. Machine selon la revendication 1 caractérisée en ce que les chaînes (9 à 12) sont réunies au plateau (24) par l'intermédiaire de moyens d'amortissement (22) agissant quand ce plateau arrive à sa position la plus élevée ou quand il est arrêté par un obstacle dans son mouvement vers le haut.

4. Machine selon la revendication 2 caractérisée en ce que les quatre poulies (3 à 6) sont montées sur un même arbre transversal (7) accouplé â un groupe moteur (8), les chaînes (9 à 12) s'étendant parallèlement au-dessus de la face supérieure du bras (2) jusqu'à quatre poulies (13 à 16) portées deux à deux par des arbres transversaux (19, 20) espacés, ces quatre poulies (13 à 16) étant situées respectivement au-dessus des ouvertures (17, 18).

5. Machine selon la revendication 4 caractérisée en ce que le groupe moteur (8), l'arbre transversal (7) et les quatre poulies (3 à 6) sont montés sur la partie extrême du bras (2) opposée à la partie extrême libre (2A) par rapport au pivot (9) et les moyens de détection contrôlant la tension des chaînes (9 à 12) sont montés sur le bras (2) entre les poulies (3 à 6) montées à une extrémité du bras (2) et les poulies (13 à 16) montées à l'autre extrémité du bras (2) au-dessus des ouvertures (17, 18).

6. Machine selon la revendication 2 caractérisée en ce que les moyens de centrage (21, 35) comprennent une tige (21) fixée à l'extrémité de chaque chaîne (9 à 12) et passant à travers les ouvertures (17, 18), tandis qu'une pièce profilée (35) se rétrécissant vers le haut et s'ajustant progressivement dans une ouverture de centrage (17, 18) correspondante est montée sur la tige (21).

7. Machine selon la revendication 3 caractérisée en ce que les moyens d'amortissement (22) comprennent chacun un logement vertical (30) fermé à son extrémité supérieure, ouvert à son extrémité inférieure et faisant partie de l'élément (28) du plateau (24), ce logement (30) étant traversé par une tige (21) fixée à l'extrémité inférieure de la chaîne (9 à 12) correspondante et contenant un ressort de compression (31) retenu par un renflement extrême (32) de la tige (21), le ressort (31) étant comprimé pendant le mouvement vers le haut de la tige (21) quand le plateau (24) est arrêté dans son mouvement vers le haut.

8. Machine selon la revendication 5 caractérisée en ce que les moyens de détection (23) comprennent chacun une bague (29) montée coulissante à frottement dur sur la tige (21) en dessous de l'ouverture correspondante (17, 18), cette bague (29) ne pouvant passer à travers cette ouverture (17, 18), tandis qu'un micro-interrupteur (33) est réuni à la paroi du logement (30) avec son élément de manoeuvre (34) tenu dans une de ses deux positions par la bague (29), le déplacement de celle-ci en même temps que la tige (21) pendant la compression du ressort (31) libérant l'élément de manoeuvre (34).

9. Machine selon les revendications 6 à 8 réunies caractérisée en ce que les pièces profilées (35) sont montées chacune coulissantes à frottement dur sur les tiges (21), au-dessus des bagues (29).

**Patentansprüche**

1. Maschine zum Füllen oder Entleeren von Behältern mit ausgerichteten Gegenständen, die zwischen einer Beschickungsstelle A für die Gegenstände und einer Beschickungsstelle B für die Behälter arbeitet, eine vertikale Stütze (1) in der Nähe der Beschickungsstelle A und der Beschickungsstelle B, einen auf der Stütze (1) angeordneten Arm (2) mit einer Drehmöglichkeit um 90 Winkelgrad zwischen einer Position, in der ein freier Endbereich (2A) des Armes (2) die Beschickungsstelle A überragt und einer Position, in der dieser Endbereich die Beschickungsstelle B überragt sowie einen mit Saugern (27) zum Erfassen der Gegenstände ausgerüsteten Kopf (24) umfaßt, der von dem Endbereich des Armes (2) getragen wird und in vertikaler Richtung mit wenigstens einem flexiblen, von Rollen (3–6) getragenen Bande (18) zwischen einer oberen Position, die das Verschwenken des Armes (2) ermöglicht und einer unteren Position zum Ergreifen oder Ablegen der Flaschen verstellbar ist, dadurch gekennzeichnet, daß mehrere flexible Bänder vorhanden sind, die von Ketten (9–12) zum Aufhängen des Kopfes (24) gebildet werden, und daß die Ketten sich unterhalb des Armes (2) erstrecken, wo jede Kette an einem Element (28) des Kopfes (24) unter Zwischenschaltung von Kraftsteuerelementen (23) und Zentrierelementen (21, 35), die mit Zentrieröffnungen (17, 18) in der obersten Lage des Kopfes (24) zusammenarbeiten, befestigt ist, und daß weiter Spannungssteuervorrichtungen (36) im Weg der Ketten (9–12) angeordnet sind, um die Spannung dieser Ketten zu kontrollieren, und daß die Rollen (3–6) zum Auf- und Abwickeln dieser Ketten (9–12) synchron arbeiten.

2. Maschine nach Anspruch 1, dadurch gekennzeichnet, daß vier Ketten (9 bis 12) vorgesehen sind, die sich bis zum freien Endbereich (2A) des Armes (2) erstrecken, wo sie jeweils bis unter den Arm (2) herabgeführt werden, um vier Zentrieröffnungen (17, 18) zu durchqueren.

3. Maschine nach Anspruch 1, dadurch gekennzeichnet, daß die Ketten (9 bis 12) mit dem Kopf (24) unter Zwischenfügen von Dämpfungselementen (22) verbunden sind, die wirksam werden, wenn dieser Kopf seine obere Endlage erreicht oder durch ein Hindernis in seinem Aufwärtsweg angehalten wird.

4. Maschine nach Anspruch 2, dadurch gekennzeichnet, daß die Rollen (3 bis 6) auf ein und derselben Querwelle (7) montiert sind, die an ein Motoraggregat (8) angekuppelt ist, und daß die Ketten (9 bis 12) sich parallel oberhalb der Oberfläche des Armes (2) bis zu vier Rollen (13 bis 16) erstrecken, die paarweise von im Abstand zueinander angeordneten Querwellen (19, 20) getragen werden, und sich oberhalb der Öffnungen (17, 18) befinden.

5. Maschine nach Anspruch 4, dadurch gekennzeichnet, daß das Motoraggregat (8), die Querwelle (7) und die vier Rollen (3 bis 6) auf dem Endbereich des Armes (2) montiert sind, der dem freien Endbereich (2A) in bezug auf den Drehzapfen (9) gegenüberliegt, und daß die Steuervorrichtungen zum Kontrollieren der Spannung der Ketten (9 bis 12) zwischen den Rollen (3 bis 6) auf dem einen Ende des Armes (2) sowie den Rollen (13 bis 16) oberhalb der Öffnungen (17, 18) auf dem anderen Ende des Armes (2) auf dem Arm (2) angeordnet sind.

6. Maschine nach Anspruch 2, dadurch gekennzeichnet, daß die Zentrierelemente (21, 35) eine Stange (21) umfassen, die an dem einen Ende jeder Kette (9 bis 12) befestigt ist und durch die Öffnungen (17, 18) geht, während ein Profilstück (35), das sich nach oben verjüngt und fortschreitend in einer der Zentrieröffnungen (17, 18) ausrichtet, auf der Stange (21) befestigt ist.

7. Maschine nach Anspruch 3, dadurch gekennzeichnet, daß jedes Dämpfungselement (22) einen vertikalen Gehäusesitz (30) umfaßt, der an seinem oberen Ende geschlossen, an seinem unteren Ende offen und ein Teil des Elementes (28) des Kopfes (24) ist, sowie von einer am unteren Ende der entsprechenden Kette (9 bis 12) befestigten Stange (21) durchquert wird und eine Druckfeder (31) enthält, die durch einen Bund (32) der Stange (21) zurückgehalten wird, wobei die Druckfeder (31) während der Aufwärtsbewegung der Stange (21) zusammengedrückt wird, wenn der Kopf (24) während der Aufwärtsbewegung angehalten wird.

8. Maschine nach Anspruch 5, dadurch gekennzeichnet, daß jedes Steuerelement (23) eine Buchse (29) umfaßt, die auf der Stange (21) unterhalb der jeweiligen Öffnung (17, 18) mit starker Reibung gleitend angeordnet ist und diese Öffnung (17, 18) nicht durchqueren kann, während mit der Wand des Gehäusesitzes (30) ein Mikroschalter (33) verbunden ist, dessen Betätigungselement (34) in einer seiner zwei Stellungen von der Buchse (29) gehalten wird, deren Verstellen gleichzeitig mit der Stange (21) beim Zusammendrücken der Druckfeder (31) das Betätigungselement (34) freigibt.

9. Maschine nach den Ansprüchen 6 bis 8, dadurch gekennzeichnet, daß jedes Profilstück (33) auf einer der Stangen (21) oberhalb der Buchse (29) mit starker Reibung gleitend angeordnet ist.

**Claims**

1. A machine for filling or emptying containers of objects arranged in rows, operating between a station A reserved for the objects and a station B reserved for the containers, comprising a vertical support (1) arranged close to the station A and to the station B, an arm (2) mounted on the support (1) with a possibility of pivoting through 90° between a position in which a free end portion (2A) of the arm (2) is lying vertically above the station A and a position in which it is lying vertically above the station B, a plate (24) equipped with suckers (27) for gripping the objects and supperted by the end portion of the arm (2) and movable in the vertical direction by means of at least one flexible tie (18) carried by pulleys (3—6), movement being effected between an upper position which allows pivoting of the arm (2) and a lower position for gripping or laying down the bottles, characterized in that there is a number of flexible ties consisting of chains (9—12) for suspension of the plate (24), these chains extending below the arm (2) where they are joined each to one member (28) of the plate (24) by way of means of detection of force (23) and of centreing means (21, 35) which cooperate with centreing openings (17, 18) in the highest position of the plate (24), means of detection (36) of tension being arranged on the course of the chains (9 to 12) for checking the tension of these chains, the pulleys (3 to 6) for winding up and unwindung the said chains (9—12) operating in synchronism.

2. A machine as in Claim 1, characterized in that it is provided with four chains (9 to 12) which extend each as far as the free end portion (2A) of the arm (2) where they descend, each passing respectively below this arm (2) through four centreing openings (17, 18).

3. A machine as in Claim 1, characterized in that the chains (9 to 12) are joined to the plate (24) by way of damper means (22) which come into action when the said plate reaches its highest position or when it is stopped by an obstacle in its upwards movement.

4. A machine as in Claim 2, characterized in that the four pulleys (3 to 6) are mounted on one and the same cross-shaft (7) coupled to a driving unit (8), the chains (9 to 12) extending in parallel above the upper face of the arm (2) as far as four pulleys (13 to 16) carried in pairs by spaces cross-shafts (19, 20), these four pulleys (13 to 16) being situated respectively above the openings (17, 18).

5. A machine as in Claim 4, characterized in that the driving unit (8), the cross-shaft (7) and the four pulleys (3 to 6) are mounted on the end portion of the arm (2) opposite from the free end portion (2A) with respect to the pivot (9) and the means of detection which check the tension of the chains (9 to 12) are mounted on the arm (2) between the pulleys (3 to 6) mounted at one end of the arm (2) and the pulleys (13 to 16) mounted at the other end of the arm (2) above the openings (17, 18).

6. A machine as in Claim 2, characterized in that the centreing means (21, 35) comprise a rod (21) attached to the end of each chain (9 to 12) and passing through the openings (17, 18), whilst a profiled piece (35) which narrows in upwards and fits progressively into a corresponding centreing opening (17, 18) is mounted on the rod (21).

7. A machine as in Claim 3, characterized in that the damper means (22) comprise each a vertical recess (30) closed at its top end and open at its bottom end and forming part of the member (28) of the plate (24), this recess (30) having passing through it a rod (21) which is attached to the bottom end of the corresponding chain (9 to 12), and containing a compression spring (31) which is caught by a shoulder (32) on the end of the rod (21), the spring (31) being compressed during the upwards movement of the rod (21) when the plate (24) is stopped in its upwards movement.

8. A machine as in Claim 5, characterized in that the means of detection (23) comprise each a ring (29) mounted with heavy sliding friction on the rod (21) below the corresponding opening (17, 18), the said ring (29) being unable to pass through the said opening (17, 18), whilst a microswitch (33) is joined to the wall of the recess (30) with its operating member (34) held in one of its two positions by the ring (29), the movement of the latter at the same time as the rod (21) during the compression of the spring (31), freeing the operating member (34).

9. A machine as in Claims 6 to 8 combined, characterized in that the profiled pieces (35) are mounted each with heavy sliding friction on the rods (21) above the rings (29).

# Fig:1

2A  2  8  37  28  9  39 38  40  1

0 040 154

Fig. 2

Fig.3

Fig.4